# FASCICULE DE BREVET EUROPEEN

(11) **EP 2 539 294 B1**
(45) Date de publication et mention de la délivrance du brevet: **22.07.2015**
(21) Numéro de dépôt: 11710269.9
(22) Date de dépôt: 25.01.2011
(51) Int. Cl.: C04B 24/26, C08F 220/28

(54) **SOLUTION AQUEUSE DE POLYMERE PEIGNE (METH)ACRYLIQUE FLUIDE AVEC UN EXTRAIT SEC SUPERIEUR A 60 %, PROCEDE DE FABRICATION ET UTILISATION COMME AGENT FLUIDIFIANT**
WÄSSRIGE LÖSUNG EINES FLÜSSIGEN (METH)ACRYLKAMMPOLYMERS MIT TROCKENGEHALT VON MEHR ALS 60%, VERFAHREN ZU IHRER HERSTELLUNG UND VERWENDUNG ALS FLUIDISIERUNGSMITTEL
AQUEOUS SOLUTION OF A FLUID (METH)ACRYLIC COMB POLYMER HAVING A DRY MATTER CONTENT GREATER THAN 60 %, METHOD FOR MANUFACTURING SAME, AND USE THEREOF AS A FLUIDIZING AGENT

(30) Priorité: 26.02.2010 US 308631 P; 24.02.2010 FR 1051302
(43) Date de publication de la demande: 02.01.2013
(73) Titulaire: Coatex S.A.S, 69730 Genay (FR)
(72) Inventeur: SUAU, Jean-Marc, F-69480 Lucenay (FR); PLATEL, David, F-01800 Saint-Maurice de Groudans (FR)
(74) Mandataire: Fiorucci, Hélène
(86) Numéro de dépôt international: PCT/IB2011/000107
(87) Numéro de publication internationale: WO 2011/104590

(56) Documents cités:
- EP-A1- 1 041 053
- EP-B1- 1 218 427
- JP-A- 6 321 596
- US-B1- 6 756 471

## Description

La présente invention concerne le secteur des additifs qui sont mis en oeuvre dans les formulations aqueuses à base de liants hydrauliques, tels que des ciments, des bétons, des mortiers, ou encore des suspensions de sulfate de calcium destinées à la fabrication du plâtre, en vue d'améliorer leur maniabilité. Les plus performants parmi ces agents sont aujourd'hui des polymères de structure peigne, disposant d'un squelette de nature (méth)acrylique fonctionnalisé par des chaînes latérales avec des fonctions hydrophiles du type alcoxy ou hydroxy polyalkylène glycol.

Les produits correspondants et aujourd'hui disponibles sur le marché sont dé 2 sortes : sous forme de poudre solide, mais ils présentent alors les inconvénients d'une poudre (dangerosité, caractère pulvérulent, difficulté à être manipulé et notamment pompé), ou sous forme d'un liquide stable et manipulable mais dont la teneur en matière active ne dépasse pas 60 %. Or, la présente invention propose un procédé de synthèse original de ces polymères, qui peut conduire à un produit ayant un extrait sec supérieur à 80 % de son poids, tout en conservant son caractère liquide, c'est-à-dire qu'il est parfaitement manipulable et notamment pompable.

Cet avantage technique est notamment établi par comparaison, à même extrait sec, entre la viscosité Brookfield™ (à 25°C et à 10 tours par minute) des produits de l'invention et de ceux de l'art antérieur. Comme le démontrent les tests effectués par la Demanderesse, les polymères de l'invention présentent un caractère largement plus fluide que ceux de l'art antérieur, pour une teneur en matière active identique. De manière très avantageuse, alors qu'aucun des produits de l'art antérieur ne s'avère liquide pour un extrait sec supérieur à 60 %, les produits de l'invention conservent leur caractère fluide, ce qui les rend parfaitement manipulables. Dans certains cas, on parvient même à maintenir un niveau de fluidité tout à fait acceptable, pour un extrait sec supérieur à 80 %, parfois supérieur à 95 %. En outre, de tels produits font état de performances tout à fait équivalentes aux polymères peignes de l'art antérieur.

Diminuer la quantité d'eau dans les formulations contenant des liants hydrauliques, sans pour autant altérer leur fluidité, est essentiel : on parvient ainsi à doper leurs propriétés mécaniques. Pour ce faire, l'homme du métier développe depuis de nombreuses années des additifs appelés « agents réducteurs d'eau » ou encore désignés sous les expressions « agents fluidifiants », « plastifiants » et « superplastifiants ».

Historiquement, les premiers d'entre eux ont été des lignosulfonates comme décrit dans le document US 3 772 045. On a ensuite mis en oeuvre des polycondensats de formaldéhyde et de naphtalène ou mélamine sulfonates, comme illustré dans les documents US 3 359 225 et US 4 258 790.

Une fois adsorbés à la surface des particules de ciment, ces polymères qui sont chargés négativement provoquent un phénomène de répulsion électrostatique, qui est à l'origine du mécanisme de dispersion des particules cimentaires ; on pourra notamment consulter le document « Superplasticizers for extending workability » (International Conference on superplasticizers and other chemical admixtures in concrete, Sorrento Italy, October 29-November 1, 2006, supplementary paper, Ed. Malhotra, American Concrete Institute, pp. 263-277).

Une nouvelle famille d'agents fluidifiants, plus performante, a ensuite vu le jour : celle des polymères carboxyliques de type peigne, disposant d'un squelette en général de nature (méth)acrylique, sur lequel sont greffées des chaînes latérales oxyalkylées terminées par des groupements hydrophiles. Le poids moléculaire de ces agents varie entre 10 000 et 100 000 g/mol environ, le poids moléculaire du groupement oxyalkylé latéral étant compris entre 1 000 et 10 000 g/mol : c'est dans ces domaines qu'on obtient les agents les plus performants en terme de fluidifiants.

Ce pouvoir fluidifiant amélioré s'explique par l'existence d'un mécanisme de répulsion stérique lié à la présence des chaînes latérales, qui se superpose au phénomène de répulsion électrostatique induit par les groupements carboxyliques anioniques. Il existe aujourd'hui 2 types de technologies pour accéder à ces polymères, conduisant respectivement à un produit final sous forme liquide ou solide.

Les produits solides sont des poudres obtenues par adsorption/séchage du polymère peigne à la surface d'un substrat solide comme une particule de silice (voir le document EP 1 636 280), par synthèse de la chaîne principale, séchage puis fonctionnalisation de celle-ci avec des macromonomères à l'état fondu (voir les documents FR 2 900 930 et FR 2 926 558), ou tout simplement par séchage dudit polymère peigne (voir les documents EP 1 052 232 et WO 00 / 17263). Outre le fait que l'étape de séchage est fortement consommatrice d'énergie, la forme sèche et pulvérulente de ces produits les rend difficile à manipuler et notamment à transvaser d'un container à l'autre (ces produits ne sont pas pompables par définition). Les produits Mighty™ 21 PSN et Melflux™ 1641 F sont des exemples de tels polymères commercialisés sous forme de poudres, respectivement par les sociétés Kao Chemicals™ et BASF™.

Les produits liquides sont quant à eux obtenus par copolymérisation directe des monomères en milieu majoritairement aqueux, selon les méthodes décrites dans les documents JP 08-217505, GB 2 319 522, EP 1 136 507, EP 1 179 517, EP 1 218 427 et EP 1 789 462. On obtient ainsi des polymères en solution dans l'eau, dont on cherche à privilégier le caractère « liquide ». A travers l'expression « caractère liquide », la Demanderesse désigne l'aptitude du produit à être manipulable et notamment pompable. Cette aptitude est directement mesurable à travers la valeur de la viscosité Brookfield™ de la solution de polymère obtenue, mesurée à 25°C et à 100 tours par minute (Bk 100) et ce, pour un extrait sec donné (ES) exprimé à travers le % en poids sec de polymère par rapport au poids totale de ladite solution. A un extrait sec donné, le produit est d'autant plus liquide que cette valeur de viscosité Brookfield™ est faible.

Or, les produits liquides aujourd'hui accessibles sur le marché présentent des extraits secs compris entre 25 % et 60 % ; on peut notamment citer :
- le Nopco™ SPC-100 (ES = 40 %, Bk100 = 400 mPa.s) de la société NOPCO™ ;
- le Nopcoflow™ WR-400S (ES = 50 %, Bk100 = 300 mPa.s) de la même société ;
- le Nopcoflow™ WR-460 (ES = 50 %, Bk100 = 600 mPa.s) de la même société ;
- la gamme des produits CP-WRM, CP-WB, CP-RS, CP-ST, CP-HR (ES = 40 %, Bk100 < 300 mPa.s) de la société LG Chem™ ;
- la gamme des produits Powerflow™ (ES = 45 %, Bk100 = 500 mPa.s) de la société KG Chemicals™ ;
l'ensemble de ces caractéristiques étant donné sur les fiches techniques desdits produits, elles-mêmes accessibles sur les sites web des sociétés correspondantes.

D'autre part, les synthèses de polymères peignes liquides décrites dans la littérature, impliquent toujours une quantité d'eau telle que l'extrait sec final des produits ne peut dépasser 60 % de leur poids total. On peut augmenter artificiellement cet extrait sec, au moyen d'additifs de formulation, tels que des tensio-actifs ou des solvants, dont la fonction est d'améliorer la solubilité dudit polymère peigne dans l'eau. Ceci étant, le recours à de tels additifs constitue une étape de fabrication supplémentaire, et complexifie la formule résultante. De plus, certains d'entre eux (dont notamment les solvants) constituent des dangers pour le formulateur et l'environnement. Enfin, ces additifs ne participent en rien au pouvoir fluidifiant du produit final.

Le document EP1041053 décrit des méthodes pour la préparation de polymères peignes utilisés comme additifs dans le ciment et vise à fournir des additifs permettant de réduire la quantité d'eau utilisée dans les formulations ainsi qu'à fournir des additifs conférant des caractéristiques de réduction d'entraînement d'air et de meilleures fluidité aux formulations de ciment, ledit document propose d'utiliser des copolymères peignes et décrit la copolymérisation de monomères acryliques tels que l'acide acrylique ou l'acide méthacrylique avec des macromonomères (méth)acryliques comprenant des chaînes polyéther oxyéthylene et aussi oxypropylène copolymérisées. Bien que visant des extraits secs élevés, ce document n'indique pas la relation entre la structure des polymères peignes et le caractère pompable et manipulable du polymère peigne le contenant.

Aujourd'hui, on ne sait donc pas fabriquer des solutions de polymères peigne, qui présentent un caractère suffisamment liquide pour être manipulables à des extraits secs commercialement très avantageux, notamment supérieurs à 60 %, voire 80 %, et même 95 % de leur poids total, et ce, sans mettre en oeuvre -ou en réduisant sensiblement la quantité- de tensio-actifs ou de solvants. Par quantité réduite, on entend un % massique de solvants ou de tensio-actifs inférieur à 5 %, préférentiellement, 2 %, très préférentiellement 1 % du poids total de la formulation de polymère peigne.

Dans cette perspective, la Demanderesse a mis au point l'utilisation, dans un procédé de fabrication d'une solution aqueuse d'un polymère peigne (méth)acrylique fonctionnalisé par des chaînes latérales du type alcoxy ou hydroxy polyalkylène glycol, et comme agent ayant la fonction d'améliorer la fluidité de ladite solution, d'au moins un macromonomère alcoxy ou hydroxy polyakylène glycol de formule (I) :

R - (OE) - (OP) - R' (I)

- OE et OP désignant respectivement l'oxyde d'éthylène et l'oxyde de propylène,
- R désigne une fonction insaturée polymérisable,
- R' représente l'hydrogène ou un groupement alkyle ayant de 1 à 4 atomes de carbone, et préférentiellement l'hydrogène,
ledit macromonomère étant caractérisé :
- en ce qu'il présente un poids moléculaire compris entre 1 000 g/mol et 10 000 g/mol, préférentiellement entre 2 000 et 6 000 g/mol,
- et en ce que le % massique de groupement OP par rapport aux groupements OE et OP est compris entre 20 % et 90 %, préférentiellement entre 50 % et 90 %.

De manière surprenante car non enseignée ni suggérée dans l'état de la technique, c'est le choix particulier du taux de motifs oxyde de propylène qui conduit à des solutions de polymères peignes ayant un caractère pompable et manipulable amélioré par rapport aux solutions de polymères peignes selon l'art antérieur. Concrètement, pour un poids moléculaire donné du monomère de formule (I), on montre tout le bénéfice de choisir le taux d'oxyde de propylène dans l'intervalle précité.

Pour des doses massiques importantes en oxyde de propylène, et pour certains poids moléculaires du monomère de formule (I), on parvient même à fabriquer des solutions aqueuses dont l'extrait sec est supérieur à 95 % de leurs poids, alors qu'elles conservent une maniabilité tout à fait acceptable (comme mesurée à travers leur viscosité Brookfield™ à 25°C et 100 tours par minute). En outre, on vérifie que le pouvoir fluidifant de tels produits n'est pas altéré.

Aussi, un premier objet de l'invention consiste en l'utilisation, dans un procédé de fabrication d'une solution aqueuse d'un polymère peigne (méth)acrylique fonctionnalisé par des chaînes latérales du type alcoxy ou hydroxy polyalkylène glycol, et comme agent ayant la fonction d'améliorer la fluidité de ladite solution, mettant en oeuvre la réaction entre de l'acide (méth)acrylique et au moins un macromonomère alcoxy ou hydroxy polyakylène glycol de formule (I) :

R - (OE) - (OP) - R' (I)

- OE et OP désignant respectivement l'oxyde d'éthylène et l'oxyde de propylène, les groupements OE et OP désignant une répartition aléatoire ou blocs,
- R désigne une fonction insaturée polymérisable,
- R' représente l'hydrogène ou un groupement alkyle ayant de 1 à 4 atomes de carbone, et préférentiellement l'hydrogène,
ledit macromonomère étant caractérisé :
- en ce qu'il présente un poids moléculaire compris entre 1 000 g/mol et 10 000 g/mol, préférentiellement entre 2 000 et 6 000 g/mol,
- et en ce que le % massique de groupement OP par rapport aux groupements OE et OP est compris entre 20 % et 90 %, préférentiellement entre 50 % et 90 %,
ladite réaction ayant lieu en présence de moins de 40 % en poids d'eau par rapport au poids total d'eau et de polymère.

Cette utilisation dans un procédé de fabrication d'une solution aqueuse d'un polymère peigne est aussi caractérisée en ce que la réaction précitée a lieu selon une méthode continue, batch ou semi-batch (ces méthodes sont notamment illustrées dans le document EP 1 218 427).

Selon une première variante, la réaction a lieu en présence de moins de 40 %, préférentiellement 30 %, très préférentiellement 20 %, et de manière extrêmement préférentielle 10 % en poids d'eau par rapport au poids total d'eau et de polymère.

Selon une deuxième variante, la réaction a lieu en présence de plus de 60 % en poids d'eau par rapport au poids total d'eau et de polymère, et la réaction est suivie d'une étape d'élimination de l'eau en vue d'obtenir un extrait sec de plus de 60 %, préférentiellement 70 %, très préférentiellement 80 %, et de manière extrêmement préférentielle 90 % en poids de polymère peigne sec.

Cette utilisation est aussi caractérisée en ce que la réaction précitée met en oeuvre, en % en poids de chacun des monomères par rapport à la somme des masses des 2 monomères, de 15 à 30 % d'acide (méth)acrylique, et de 70 % à 85 % du macromonômère de formule (I).

Cette utilisation dans un procédé de fabrication d'un polymere peigne est aussi caractérisée en ce que ledit procédé comporte une étape d'ajout de solvant(s) et/ou de tensio-actif(s) dans la solution aqueuse de polymère peigne, la quantité du ou desdits solvant(s) et/ou tensio-actif(s) ne dépassant pas 5 %, préférentiellement 2 %, très préférentiellement 1 % en poids du poids total de ladite solution.

Cette utilisation dans un procédé de fabrication d'un polymère peigne est aussi caractérisée en ce que ledit procédé comporte une étape de neutralisation totale ou partielle du polymère, par un ou plusieurs agents choisis parmi l'ammoniaque ou parmi les hydroxydes et / ou oxydes de calcium, de magnésium, ou parmi les hydroxydes de sodium, de potassium, de lithium, ou parmi la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle en ce que l'agent de neutralisation est l'hydroxyde de sodium.

Cette utilisation dans un procédé de fabrication d'un polymère peigne est aussi caractérisée en ce que ledit procédé comporte une étape de séparation du polymère en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

Un autre objet de la présente invention consiste en une solution aqueuse avec un extrait sec de plus de 60 %, préférentiellement 70 %, très préférentiellement 80 %, extrêmement préférentiellement 90 % en poids de polymère peigne sec, constitué d'acide (méth)acrylique et d'un macromonomère alcoxy ou hydroxy polyakylène glycol de formule (I) :

R - (OE) - (OP) - R' (I)

- OE et OP désignant respectivement l'oxyde d'éthylène et l'oxyde de propylène, les groupements OE et OP désignant une répartition aléatoire ou blocs
- R désigne une fonction insaturée polymérisable,
- R' représente l'hydrogène ou un groupement alkyle ayant de 1 à 4 atomes de carbone, et préférentiellement l'hydrogène,
ledit macromonomère étant caractérisé :
- en ce qu'il présente un poids moléculaire compris entre 1 000 g/mol et 10 000 g/mol, préférentiellement entre 2 000 et 6 000 g/mol,
- et en ce que le % massique de groupement OP par rapport aux groupements OE et OP est compris entre 15 % et 95 %, préférentiellement entre 20 % et 90 %, préférentiellement entre 50 % et 90 %.

Cette solution est aussi caractérisée en ce que le polymère qu'elle contient comprend, en % en poids de chacun de ses monomères par rapport à la somme des masses de ses 2 monomères, de 15 % à 30 % d'acide (méth)acrylique, et de 70 % à 85 % du macromonomère de formule (I).

Cette solution est aussi caractérisée en ce qu'elle peut contenir jusqu'à 5' %, préférentiellement 2 %, préférentiellement 1 % en poids par rapport à son poids total, de solvant(s) et/ou de tensio-actifs.

Cette solution est aussi caractérisée en ce que le polymère peigne qu'elle contient peut être neutralisé totalement ou partiellement, par un ou plusieurs agents choisis parmi l'ammoniaque ou parmi les hydroxydes et / ou oxydes de calcium, de magnésium, ou parmi les hydroxydes de sodium, de potassium, de lithium, ou parmi la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle en ce que l'agent de neutralisation est l'hydroxyde de sodium.

Un autre objet de l'invention consiste en l'utilisation de la solution aqueuse de polymère peigne précitée, comme agent fluidifiant dans une composition à base de liants hydrauliques.

Un dernier objet de l'invention consiste en une composition à base de liants hydrauliques, contenant ladite solution aqueuse de polymère peigne précité.

### EXEMPLES

### Exemple 1

Cet exemple illustre des solutions aqueuses de polymères peignes selon l'invention et l'art antérieur.

Dans un réacteur en verre de 1 L muni d'une agitation mécanique, d'un système de régulation thermique et d'un thermomètre, on introduit :
- 740 grammes d'un monomère de masse molaire égale à 3 000 g/mole et de formule (I) dans laquelle, R est la fonction méthacrylate, R' est l'hydrogène, le % d'oxyde d'éthylène étant de 70 % en masse par rapport à la masse totale d'oxyde d'éthylène et d'oxyde de propylène ;
- 70 grammes d'une solution aqueuse d'acide méthacrylique (90 % massique).

On chauffe le mélange sous agitation à 54°C et on coule sur la solution :
- 3,75 grammes de DMDO ;
- une solution constituée de 3,2 grammes de persulfate d'ammonium et 6 grammes d'eau.

La température du milieu monte progressivement à 73°C en 20 minutes.

On cuit le milieu pendant 3 heures à 65°C puis l'ensemble est refroidi à 25°C.

Cette synthèse correspond à la fabrication du produit selon l'essai n° 7.

Les synthèses de tous les produits selon les essais 1, 3 à 14, 15 à 17 sont réalisées de cette même manière.

L'essai n° 2 correspond au produit commercial Melflux™ 2500 commercialisé par la société BASF™.

L'essai n° 15 correspond au produit commercial Mighty™ 21 ES commercialisé par la société KAO™.

Dans le tableau 1, on a indiqué toutes les caractéristiques des synthèses, et notamment :
- le système catalytique utilisé (DMDO, AZDN = Azo-bis-isobutyronitrile, PerNH4 = persulfate d'ammonium, les chiffres indiquant les % massiques de chaque catalyseur, par rapport à la masse totale de monomères engagés) ;
- % AMA désignant le % massique d'acide méthacrylique ;
- Mw polymère désignant la masse moléculaire du polymère fabriqué ;
- Mw mono (I) désignant la masse moléculaire du monomère de formule (I) mis en oeuvre ;
- R' mono (I) ayant la signification telle que donnée dans ladite formule (I) ;
- % OP mono (I) désignant le % en masse d'oxyde de propylène par rapport la masse totale d'oxyde d'éthylène et de propylène contenus dans le monomère de formule (I).

Dans le tableau 2, on a indiqué pour chaque essai (IN pour l'invention et HI pour hors invention), la valeur de la viscosité Brookfield™ mesurée à 100 tours par minute à 25°C, de chaque solution de polymère, en fonction de son extrait sec qu'on a fait varier par évaporation de l'eau (µ50 désignant par exemple ladite viscosité, en mPa.s, correspondant à un extrait sec de 60 % en poids de matière active).

On constate donc que pour un poids moléculaire donné du monomère de formule (I), c'est bien le choix particulier du taux de motifs d'oxyde de propylène comme revendiqué, qui conduit aux solutions les plus manipulables.

**Tableau 1**

| Essai n° | catalyseur | % AMA | Mw polymère | Mw mono (I) | R' Mono (I) | %OP Mono (I) |
|---|---|---|---|---|---|---|
| | | | | | | |
| 1 | DMDO-AZDN 1,6-1,1 | 10 | 30 000 | 2 000 | CH3 | 0 |
| 3 | DMDO-AZDN 1,6-1,1 | 10 | 30 000 | 2 000 | CH3 | 30 |
| | | | | | | |
| 4 | DMDO-AZDN 1,6-0,85 | 10 | 60 000 | 3 000 | H | 0 |
| 5 | DM DO-AZDN 1,6-0,85 | 10 | 60 000 | 3 000 | H | 10 |
| 6 | DMDO-AZDN 1,6-0,85 | 10 | 60 000 | 3 000 | H | 20 |
| 7 | DMDO-PerNH4 1,2-0,75 | 12,8 | 60 000 | 3 000 | H | 30 |
| 8 | DMDO-AZDN 1,6-1,1 | 10 | 60 000 | 3 000 | H | 40 |
| 9 | DMDO-AZDN 1,6-1,1 | 12,5 | 60 000 | 3 000 | H | 50 |
| 10 | DMDO-AZDN 1,6-0,85 | 12,5 | 60 000 | 3 000 | H | 70 |
| | | | | | | |
| 11 | DMDO-AZDN 1.6-1.1 | 10 | 80 000 | 4 000 | H | 0 |
| 12 | DMDO-AZDN 1,6-1,1 | 10 | 80 000 | 4 000 | H | 80 |
| 13 | DMDO-AZDN 1,6-1,1 | 12,5 | 80 000 | 4 000 | H | 100 |
| | | | | | | |
| 14 | DMDO-PerNH4 1,6-0,85 | 10 | 30 000 | 5 000 | H | 0 |
| 16 | DMDO-PerNH4 1,6-0,85 | 12,5 | 28 000 | 5 000 | H | 30 |
| | | | | | | |
| 17 | DMDO-AZDN 1,3-1,1 | 12,5 | 33 000 | 6 000 | H | 30 |
| 18 | DMDO-AZDN 1,3-1,1 | 12,5 | 34 000 | 6 000 | H | 100 |

**Tableau 2**

| Essai | HI | Mw | %OP | µ | µ | µ | µ | µ | µ |
|---|---|---|---|---|---|---|---|---|---|
| n° | IN | Mono (I) | Mono (I) | 60 | 70 | 80 | 90 | 95 | 99 |
| | | | | | | | | | |
| 1 | HI | 2 000 | 0 | 10 000 | solide | solide | solide | solide | solide |
| 2 | HI | 2 000 | 0 | 9 800 | solide | solide | solide | solide | solide |
| 3 | IN | 2 000 | 30 | 1 800 | 10 000 | 15 000 | 25 000 | 45 000 | 65 000 |
| | | | | | | | | | |
| 4 | HI | 3 000 | 0 | 4 500 | solide | solide | solide | solide | solide |
| 5 | HI | 3 000 | 10 | 3 200 | 36 000 | solide | solide | solide | solide |
| 6 | HI | 3 000 | 20 | 2 400 | 32 000 | solide | solide | solide | solide |
| 7 | IN | 3 000 | 30 | 2 100 | 21 000 | 50 000 | solide | solide | solide |
| 8 | IN | 3 000 | 40 | non mesuré | non mesuré | non mesuré | 78 000 | solide | solide |
| 9 | IN | 3 000 | 50 | 2 000 | 4 100 | 17 000 | 69 000 | non mesuré | 96 000 |
| 10 | IN | 3 000 | 70 | 2 100 | 5 100 | 11 000 | 26 000 | 50000 | 105000 |
| | | | | | | | | | |
| 11 | HI | 4 000 | 0 | solide | solide | solide | solide | solide | solide |
| 12 | IN | 4 000 | 80 | non mesuré | 12 000 | non mesuré | 95 000 | solide | solide |
| 13 | HI | 4 000 | 100 | non mesuré | solide | solide | solide | solide | solide |
| | | | | | | | | | |
| 14 | HI | 5 000 | 0 | 9 800 | solide | solide | solide | solide | solide |
| 15 | HI | 5 000 | 0 | 9 600 | solide | solide | solide | solide | solide |
| 16 | IN | 5 000 | 30 | 2 400 | 9 200 | 27 000 | 63 000 | 130000 | solide |
| | | | | | | | | | |
| 17 | IN | 6 000 | 30 | 4 500 | 23 000 | 64 000 | 110000 | 152000 | 344000 |
| 18 | HI | 6 000 | 100 | 65 000 | solide | solide | solide | solide | solide |

## Revendications

1. Procédé de fabrication d'une solution aqueuse d'un polymère peigne (méth)acrylique fonctionnalisé par des chaînes latérales du type alcoxy ou hydroxy polyalkylène glycol, mettant en oeuvre la réaction entre de l'acide (méth)acrylique et au moins un macromonomère alcoxy ou hydroxy polyakylène glycol de formule (I) :
R - (OE) - (OP) - R' (I)
- OE et OP désignant respectivement l'oxyde d'éthylène et l'oxyde de propylène, les groupements OE et OP désignant une répartition aléatoire ou blocs,
- R désigne une fonction insaturée polymérisable,
- R' représente l'hydrogène ou un groupement alkyle ayant de 1 à 4 atomes de carbone, et préférentiellement l'hydrogène,
ledit macromonomère étant **caractérisé :**
- **en ce qu'**il présente un poids moléculaire compris entre 1 000 g/mol et 10 000 g/mol, préférentiellement entre 2 000 et 6 000 g/mol,
- et **en ce que** le % massique de groupement OP par rapport aux groupements OE et OP est compris entre 20 % et 90 %, préférentiellement entre 50 % et 90 %,
ladite réaction ayant lieu en présence de moins de 40 % en poids d'eau par rapport au poids total d'eau et de polymère.

2. Procédé selon la revendication 1, **caractérisé en ce que** la réaction a lieu selon une méthode continue, batch ou semi-batch.

3. Procédé selon une des revendications 1 ou 2, **caractérisée en ce que** la réaction a lieu en présence de moins de 30 %, préférentiellement 20%, et de manière extrêmement préférentielle 10 % en poids d'eau par rapport au poids total d'eau et de polymère.

4. Procédé selon une des revendications 1 à 3, **caractérisé en ce que** la réaction met en oeuvre, en % en poids de chacun des monomères par rapport à la somme des masses des 2 monomères, de 15 % à 30 % d'acide (méth)acrylique, et de 70 % à 85 % du macromonomère de formule (I).

5. Procédé selon une des revendications 1 à 4, **caractérisé en ce que** ledit procédé comporte une étape d'ajout de solvant(s) et/ou de tensio-actif(s) dans la solution aqueuse de polymère peigne, la quantité du ou desdits solvant(s) et/ou tensio-actif(s) ne dépassant pas 5 %, préférentiellement 2 %, très préférentiellement 1 % en poids du poids total de ladite solution.

6. Procédé selon une des revendications 1 à 5, **caractérisé en ce que** ledit procédé comporte une étape de neutralisation totale ou partielle du polymère, par un ou plusieurs agents choisis parmi l'ammoniaque ou parmi les hydroxydes et / ou oxydes de calcium, de magnésium, ou parmi les hydroxydes de sodium, de potassium, de lithium, ou parmi la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle **en ce que** l'agent de neutralisation est l'hydroxyde de sodium.

7. Procédé selon une des revendications 1 à 6, **caractérisé en ce que** ledit procédé comporte une étape de séparation du polymère en plusieurs phases, selon des procédés statiques ou dynamiques, par un ou plusieurs solvants polaires appartenant préférentiellement au groupe constitué par l'eau, le méthanol, l'éthanol, le propanol, l'isopropanol, les butanols, l'acétone, le tétrahydrofurane ou leurs mélanges.

8. Utilisation, dans un procédé selon une des revendications 1 à 7, d'un macromonomère de formule (I), comme agent ayant la fonction d'améliorer la fluidité de la solution aqueuse de polymère peigne ainsi fabriquée.

9. Solution aqueuse avec un extrait sec de plus de 60 %, préférentiellement 70 %, très préférentiellement 80 %, extrêmement préférentiellement 90 % en poids de polymère peigne sec, constitué d'acide (méth)acrylique et d'un macromonomère alcoxy ou hydroxy polyakylène glycol de formule (I) :
R - (OE) - (OP) - R' (I)
- OE et OP désignant respectivement l'oxyde d'éthylène et l'oxyde de propylène, les groupements OE et OP désignant une répartition aléatoire ou blocs,
- R désigne une fonction insaturée polymérisable,
- R' représente l'hydrogène ou un groupement alkyle ayant de 1 à 4 atomes de carbone, et préférentiellement l'hydrogène,
ledit macromonomère étant **caractérisé :**
- **en ce qu'**il présente un poids moléculaire compris entre 1 000 g/mol et 10 000 g/mol, préférentiellement entre 2 000 et 6 000 g/mol,
- et **en ce que** le % massique de groupement OP par rapport aux groupements OE et OP est compris entre 15 % et 95 %, préférentiellement entre 20 % et 90 %, préférentiellement entre 50 % et 90 %.

10. Solution selon la revendication 9, **caractérisée en ce que** le polymère qu'elle contient, en % en poids de chacun de ses monomères par rapport à la somme des masses de ses 2 monomères, de 15 % à 30 % d'acide (méth)acrylique, et de 70 % à 85 % du macromonomère de formule (I).

11. Solution selon l'une des revendications 9 ou 10, **caractérisée en ce qu'**elle peut contenir jusqu'à 5 %, préférentiellement 2 %, préférentiellement 1 % en poids par rapport à son poids total, de solvant(s) et/ou de tensio-actifs.

12. Solution selon l'une des revendications 9 à 11, **caractérisée en ce que** le polymère peigne qu'elle contient peut être neutralisé totalement ou partiellement, par un ou plusieurs agents choisis parmi l'ammoniaque ou parmi les hydroxydes et / ou oxydes de calcium, de magnésium, ou parmi les hydroxydes de sodium, de potassium, de lithium, ou parmi la stéarylamine, les éthanolamines (mono-, di-, triéthanolamine), la mono et diéthylamine, la cyclohexylamine, la méthylcyclohexylamine, l'amino méthyl propanol, la morpholine, et de manière préférentielle **en ce que** l'agent de neutralisation est l'hydroxyde de sodium.

13. Utilisation de la solution aqueuse de polymère peigne selon l'une des revendications 9 à 12, comme agent fluidifiant dans une composition à base de liants hydrauliques.

14. Composition à base de liants, hydrauliques, contenant ladite solution aqueuse de polymère peigne selon l'une des revendications 9 à 12.

## Patentansprüche

1. Verfahren zur Herstellung einer wässrigen Lösung eines durch Alkoxy- oder Hydroxypolyalkylenglykol-Seitenketten funktionalisierten (Meth)acryl-Kammpolymers unter Verwendung der Umsetzung zwischen (Meth)acrylsäure und mindestens einem Alkoxy- oder Hydroxypolyalkylenglykol-Makromonomer der Formel (I):
R-(EO)-(PO)-R' (I)
- wobei EO und PO für Ethylenoxid bzw. Propylenoxid stehen, wobei die EO- und PO-Gruppen statistisch oder blockartig verteilt sind,
- R für eine polymerisierbare ungesättigte Funktion steht,
- R' für Wasserstoff oder eine Alkylgruppe mit 1 bis 4 Kohlenstoffatomen und vorzugsweise Wasserstoff steht,
wobei das Makromonomer **dadurch gekennzeichnet ist, dass**:
- es ein Molekulargewicht zwischen 1 000 g/mol und 10 000 g/mol, vorzugsweise zwischen 2 000 und 6 000 g/mol, aufweist,
- und der Gewichtsprozentanteil der PO-Gruppe, bezogen auf die EO- und PO-Gruppen, zwischen 20% und 90%, vorzugsweise zwischen 50% und 90% liegt,
wobei die Umsetzung in Gegenwart von weniger als 40 Gew.-% Wasser, bezogen auf das Gesamtgewicht von Wasser und Polymer, stattfindet.

2. Verfahren nach Anspruch 1, **dadurch gekennzeichnet, dass** die Umsetzung gemäß einer kontinuierlichen, diskontinuierlichen oder halbkontinuierlichen Methode stattfindet.

3. Verfahren nach einem der Ansprüche 1 oder 2, **dadurch gekennzeichnet, dass** die Umsetzung in Gegenwart von mindestens 30 Gew.-%, vorzugsweise 20 Gew.-% und ganz besonders bevorzugt 10 Gew.-% Wasser, bezogen auf das Gesamtgewicht von Wasser und Polymer, stattfindet.

4. Verfahren nach einem der Ansprüche 1 bis 3, **dadurch gekennzeichnet, dass** bei der Umsetzung 15 bis 30 Gew.-% (Meth)acrylsäure und 70 bis 85 Gew.-% des Makromonomers der Formel (I), jeweils bezogen auf die Summe der Massen der 2 Monomere, verwendet werden.

5. Verfahren nach einem der Ansprüche 1 bis 4, **dadurch gekennzeichnet, dass** das Verfahren einen Schritt der Zugabe von Lösungsmittel(n) und/oder Tensid(en) zu der wässrigen Kammpolymerlösung umfasst, wobei die Menge des Lösungsmittels bzw. der Lösungsmittel und/oder des Tensids bzw. der Tenside höchstens 5 Gew.-%, vorzugsweise 2 Gew.-% und besonders bevorzugt 1 Gew.-%, bezogen auf das Gesamtgewicht der Lösung, beträgt.

6. Verfahren nach einem der Ansprüche 1 bis 5, **dadurch gekennzeichnet, dass** das Verfahren einen Schritt der vollständigen oder teilweisen Neutralisation des Polymers durch ein oder mehrere Mittel, die aus wässrigem Ammoniak oder aus Calcium- und Magnesiumhydroxid und/oder -oxid, Natrium-, Kalium- und Lithiumhydroxid oder aus Stearylamin, Ethanolaminen (Mono-, Di- und Tri-ethanolamin), Mono- und Diethylamin, Cyclohexylamin, Methylcyclohexylamin, Aminomethylpropanol und Morpholin ausgewählt werden, umfasst und es sich bei dem Neutralisationsmittel vorzugsweise um Natriumhydroxid handelt.

7. Verfahren nach einem der Ansprüche 1 bis 6, **dadurch gekennzeichnet, dass** das Verfahren einen Schritt der Trennung des Polymers in mehrere Phasen gemäß statischen oder dynamischen Verfahren durch ein oder mehrere polare Lösungsmittel, die vorzugsweise zu der aus Wasser, Methanol, Ethanol, Propanol, Isopropanol, Butanolen, Aceton, Tetrahydrofuran oder Mischungen davon bestehenden Gruppe gehören, umfasst.

8. Verwendung eines Makromonomers der Formel (I) bei einem Verfahren nach einem der Ansprüche 1 bis 7 als Mittel zur Verbesserung der Fließfähigkeit der so hergestellten wässrigen Kammpolymerlösung.

9. Wässrige Lösung mit einem Feststoffgehalt von mehr als 60 Gew.-%, vorzugsweise 70 Gew.-%, besonders bevorzugt 80 Gew.-% und ganz besonders bevorzugt 90 Gew.-% trockenem Kammpolymer, bestehend aus (Meth)acrylsäure und einem Alkoxy- oder Hydroxypolyalkylenglykol-Makromonomer der Formel (I):
R-(EO)-(PO)-R' (I)
- wobei EO und PO für Ethylenoxid bzw. Propylenoxid stehen, wobei die EO- und PO-Gruppen statistisch oder blockartig verteilt sind,
- R für eine polymerisierbare ungesättigte Funktion steht,
- R' für Wasserstoff oder eine Alkylgruppe mit 1 bis 4 Kohlenstoffatomen und vorzugsweise Wasserstoff steht,
wobei das Makromonomer **dadurch gekennzeichnet ist, dass**:
- es ein Molekulargewicht zwischen 1 000 g/mol und 10 000 g/mol, vorzugsweise zwischen 2 000 und 6 000 g/mol, aufweist,
- und der Gewichtsprozentanteil der PO-Gruppe, bezogen auf die EO- und PO-Gruppen, zwischen 15% und 95%, vorzugsweise zwischen 20% und 90%, vorzugsweise zwischen 50% und 90%, liegt.

10. Lösung nach Anspruch 9, **dadurch gekennzeichnet, dass** das Polymer 15 bis 30 Gew.-% (Meth)acrylsäure und 70 bis 85 Gew.-% des Makromonomers der Formel (I), jeweils bezogen auf die Summe der Massen seiner 2 Monomere, enthält.

11. Lösung nach einem der Ansprüche 9 oder 10, **dadurch gekennzeichnet, dass** sie bis zu 5 Gew.-%, vorzugsweise 2 Gew.-% und vorzugsweise 1 Gew.-%, bezogen auf ihr Gesamtgewicht, Lösungsmittel und/oder Tenside enthalten kann.

12. Lösung nach einem der Ansprüche 9 bis 11, **dadurch gekennzeichnet, dass** das Kammpolymer, das sie enthält, durch ein oder mehrere Mittel, die aus wässrigem Ammoniak oder aus Calcium- und Magnesiumhydroxid und/oder -oxid, Natrium-, Kalium- und Lithiumhydroxid oder aus Stearylamin, Ethanolaminen (Mono-, Di- und Triethanolamin), Mono- und Diethylamin, Cyclohexylamin, Methylcyclohexylamin, Aminomethylpropanol und Morpholin ausgewählt sind, vollständig oder teilweise neutralisiert ist und es sich bei dem Neutralisationsmittel vorzugsweise um Natriumhydroxid handelt.

13. Verwendung der wässrigen Kammpolymerlösung nach einem der Ansprüche 9 bis 12 als Verflüssigungsmittel in einer Zusammensetzung auf Basis hydraulischer Bindemittel.

14. Zusammensetzung auf Basis hydraulischer Bindemittel, enthaltend die wässrige Kammpolymerlösung nach einem der Ansprüche 9 bis 12.

## Claims

1. Method for manufacturing an aqueous solution of a (meth)acrylic comb-branched polymer functionalized by side-chains of the alcoxy- or hydroxy-polyalkylene glycol type, implementing the reaction between the (meth)acrylic acid and at least one alcoxy-or hydroxy-polyalkylene glycol macromonomer of formula (I):
R - (EO) - (PO) - R' (I)
- EO and PO respectively designate ethylene oxide and propylene oxide, the EO and PO groups refer to random or block distribution,
- R designates a polymerizable unsaturated group,
- R' represents hydrogen or an alkyl group having 1 to 4 carbon atoms, and preferentially hydrogen,
said macromonomer being **characterized:**
- **in that** it exhibits a molecular weight between 1,000 g/mol and 10,000 g/mol, more preferentially between 2,000 and 6,000 g/mol,
- and **in that** the mass percentage of the PO group compared to the EO and PO groups is between 20% and 90%, preferentially between 50% and 90%,
the said reaction taking place in the presence of less than 40% by weight of water compared to the total weight of water and polymer.

2. Method according to claim 1, **characterized in that** the reaction takes place according to a continuous method, batch or semi-batch.

3. Method according to one of the claims 1 or 2, **characterized in that** the reaction takes place in the presence of less than 30%, preferentially 20%, and more preferentially 10% by weight of the water compared to the total weight of the water and polymer.

4. Method according to one of the claims 1 to 3, **characterized in that** the reaction implements, in percentage by weight of each of the monomers compared to the sum of the masses of the 2 monomers, from 15% to 30% of (meth)acrylic acid, and from 70% to 85% of the macromonomer of formula (I).

5. Method according to one of the claims 1 to 4, **characterized in that** said method comprises a step of adding solvent(s) and/or surfactant(s) into the aqueous comb-branched polymer solution, the quantity of said solvent(s) and/or surfactant(s) not exceeding 5%, preferentially 2%, more preferentially 1% by weight of the said solution's total weight.

6. Method according to one of the claims 1 to 5, **characterized in that** said method comprises a step of fully or partially neutralization of the polymer, by one or several agents chosen from among ammonium hydroxide or from among calcium, magnesium hydroxides and/or oxides, or from among sodium, potassium, or lithium hydroxides, or from among stearylamine, ethanolamines (mono-, di-, triethanolamine), mono- and diethylamine, cyclohexylamine, methylcyclohexylamine, amino-methyl-propanol, morpholine, and more preferentially **in that** the neutralization agent is sodium hydroxide.

7. Method according to one of the claims 1 to 6, **characterized in that** said method comprises a phase separation step of the polymer into multiple phases, according to static or dynamic methods, by one or more polar solvents more preferentially belonging to the group made up of water, methanol, ethanol, propanol, isopropanol, butanols, acetone, tetrahydrofuran, or mixtures thereof.

8. Use, in a method according to one of the claims 1 to 7, of a macromonomer of formula (I), as agent with the function of improving the fluidity of the aqueous comb-branched polymer solution thereby produced.

9. Aqueous solution with a solids content greater than 60%, preferentially 70%, more preferentially 80%, and extremely more preferentially 90% by dry comb-branched polymer weight, made up of a (meth)acrylic acid and of an alcoxy- or hydroxy-polyalkylene glycol macromonomer of formula (I):
R - (EO) - (PO) - R' (I)
- EO and PO respectively designate ethylene oxide and propylene oxide, the EO and PO groups refer to random or block distribution,
- R designates a polymerizable unsaturated group,
- R' represents hydrogen or an alkyl group having 1 to 4 carbon atoms, and more preferentially hydrogen,
said macromonomer being **characterized:**
- **in that** it exhibits a molecular weight of between 1,000 g/mol and 10,000 g/mol, more preferentially between 2,000 and 6,000 g/mol,
- and **in that** the mass percentage of the PO group compared to the EO and PO groups is between 15% and 95%, preferentially between 20% and 90%, preferentially between 50% and 90%.

10. Solution according to claim 9, **characterized in that** the polymer that it contains comprises, in percentage by weight of each of the monomers compared to the sum of the masses of its 2 monomers, from 15% to 30% of (meth)acrylic acid, and from 70% to 85% of the macromonomer of formula (I).

11. Solution according to one of the claims 9 or 10, **characterized in that** it may contain up to 5%, preferentially 2%, preferentially 1% by weight compared to its total weight, of solvent(s) and/or surfactant(s).

12. Solution according to one of the claims 9 to 11, **characterized in** the comb-branched polymer that it contains can be fully or partially neutralized, by one or several agents chosen from among ammonium hydroxide or from among calcium, magnesium hydroxides and/or oxides, or from among sodium, potassium, lithium hydroxides, or from among stearylamine, ethanolamines (mono-, di-, triethanolamine), mono- and diethylamine, cyclohexylamine, methylcyclohexylamine, amino-methyl-propanol, morpholine, and preferentially **in that** the neutralization agent is sodium hydroxide.

13. Use of the aqueous solution of comb-branched polymer according to one of the claims 9 to 12, as a plasticizing agent in a composition based on hydraulic binders.

14. Composition based on hydraulic binders, containing said aqueous solution of comb-branched polymers according to one of the claims 9 to 12.
